# FASCICULE DE BREVET EUROPEEN

(11) **EP 0 993 572 B1**
(45) Date de publication et mention de la délivrance du brevet: **19.09.2001**
(21) Numéro de dépôt: 97932886.1
(22) Date de dépôt: 10.07.1997
(51) Int. Cl.: F16K 1/24

(54) **ROBINET A PAPILLON AVEC DES PALIERS EXCENTRES**
KLAPPE MIT EXZENTRISCHEN LAGERN
BUTTERFLY VALVE WITH OFFSET BEARINGS

(43) Date de publication de la demande: 19.04.2000
(73) Titulaire: Mazot, Lucien, 95770 Montreuil sur Epte (FR)
(72) Inventeur: Mazot, Lucien, 95770 Montreuil sur Epte (FR)
(86) Numéro de dépôt international: FR9701263
(87) Numéro de publication internationale: WO9902902

(56) Documents cités:
- FR-A- 1 392 279
- FR-A- 2 745 057

## Description

La présente invention concerne un dispositif permettant l'ajustement et le réglage de la position d'appui à la fermeture entre le clapet (partie mobile) et le siège (partie fixe) d'une vanne ou robinet à arbre rotatif.

La quasi totalité des vannes ou robinets à arbre rotatif simple, double ou à triple excentration ont leurs caractéristiques d'étanchéité et de réglage mécaniquement dépendantes de la position relative du clapet par rapport au siège sur lequel il s'appuie au moment de la fermeture.

Les performances d'étanchéité et de réglage ne seront optimales que si la ligne de portée théorique du clapet qu'elle soit circulaire, elliptique ou autre de la vanne est strictement superposée et confondue avec la même ligne de portée théorique du siège, pour ce faire ces deux lignes de portées doivent impérativement et simultanément être géométriquement identiques et superposables dans l'espace.

L'état de la technique antérieure traditionnelle des vannes et robinets rotatifs avec paliers à alésage concentrique est telle que la superposition de la ligne de portée du clapet avec la ligne de portée du siège est pratiquement imposssible ; toute approche n'est réalisable en pratique que par un usinage extrêment précis des pièces constituantes conduisant à un coût de fabrication très élevé du produit fini ; de plus, l'usure progressive de ces pièces constituantes modifie les dimensions originales des pièces et détruit donc la superposition originale de la ligne de portée du clapet sur son siège et participe ainsi à une dégradation progressive des caractéristiques d'étanchéité et ce sans aucune possibilité de rattrapage autre que par le remplacement des pièces usées par de nouvelles pièces.

L'état de la technique antérieure traditionnelle des vannes et robinets ne permet pas de corriger l'inversion des jeux entre les pièces constituantes lorsque le sens du fluide dans la vanne est inversé.

La technique antérieure FRA-1-392279 qui a servi à délimiter la revendication 1 décrit un ensemble de commande constitué de coussinets excentriques rotatifs accouplés à la commande de l'arbre moteur, ces coussinets ont lors du fonctionnement un mouvement rotatif continu, provoquant du fait de leur excentration un déplacement en translation du clapet approchant ou éloignant ce dernier du siège ; ce mécanisme dynamique a pour objet d'obtenir par la rotation simultanée des paliers un déplacement linéaire du clapet perpendiculaire à l'orifice de la vanne, (voir page 1 colonne de droite, lignes 36 et 37), contrairement à la présente invention qui a pour objet de positionner l'arbre de vanne et le clapet à une position fixe lors du fonctionnement de la vanne.

Le dispositif selon l'invention permet de remédier globalement à ces inconvénients.

Il comporte en effet selon une première caractéristique deux paliers excentrés :

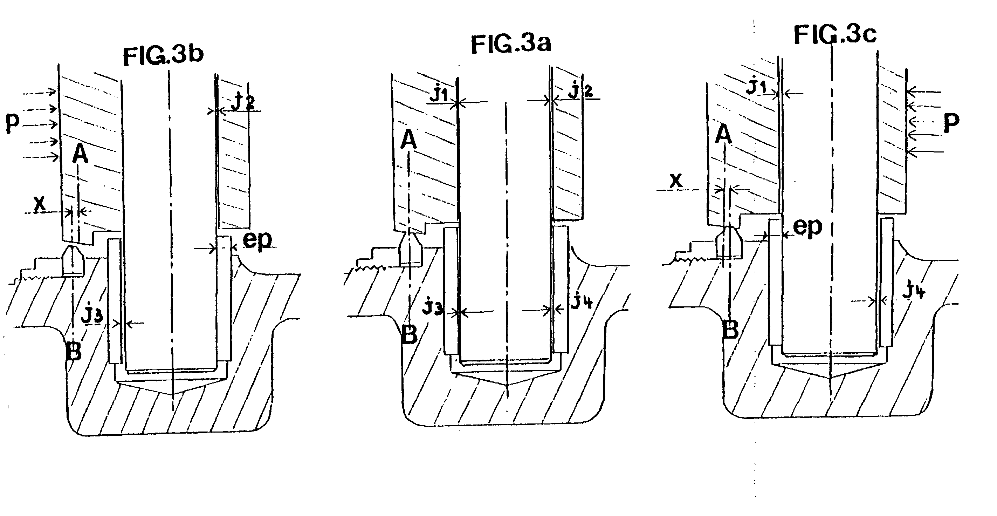

Nous entendons par paliers excentrés des paliers dont l'alésage intérieur est excentré par rapport au diamètre extérieur, l'épaisseur portante ep (FIG.3.b) de ces paliers suivant le dispositif de cette invention devient réglable permettant ainsi par une simple rotation des paliers d'effectuer un repositionnement de l'arbre de vanne 4) et du clapet 5) par rapport au siège 6) ; ce qui permet de corriger sans aucun coût additionnel :
- les variations dimensionnelles dues aux tolérances de fabrication des pièces constituantes (en plus ou en moins par rapport à la dimension nominale).
- l'usure des pièces,
- l'inversion de l'emplacement des jeux mécaniques des pièces mobiles résultants d'une inversion du sens du fluide dans le corps de vanne.

Les dessins annexes illustrent l'invention.

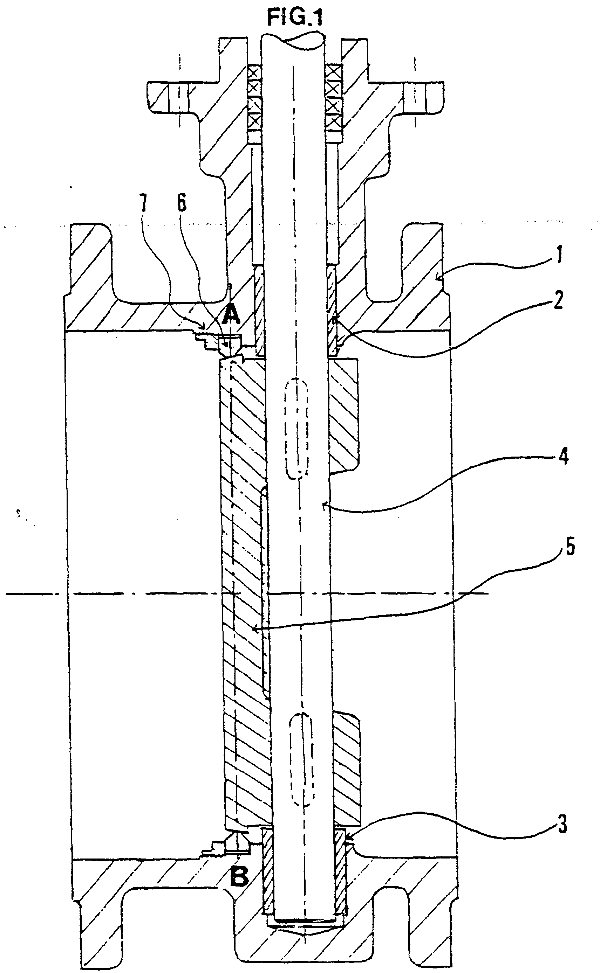

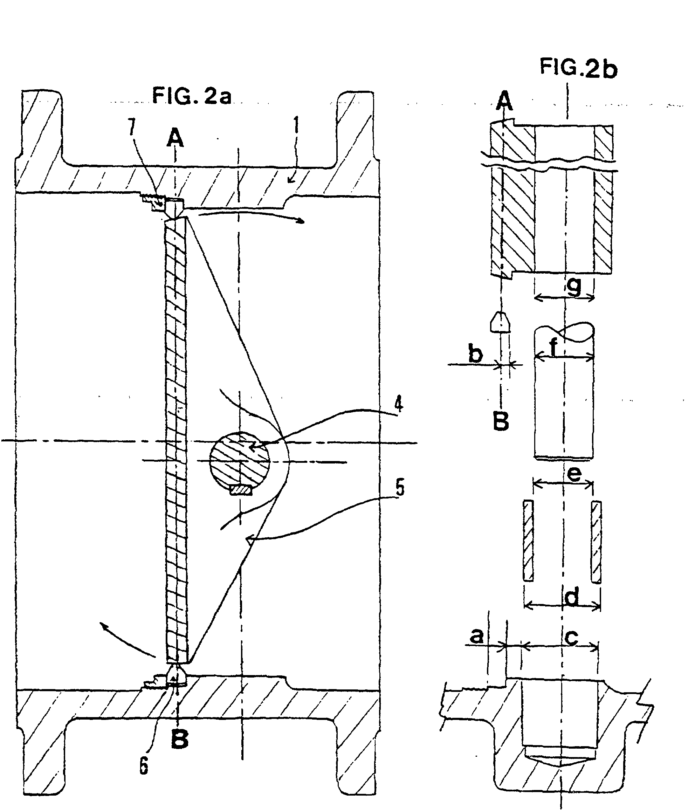

La **FIG.1** et la **FIG.2.**a représentent en coupe un corps de vanne ou de robinet comprenant le corps de vanne 1), le palier supérieur 2), le palier inférieur 3), l'arbre de vanne 4), le clapet de vanne 5), le siège 6), l'anneau de blocage de siège 7).

Les paliers 2) et 3) sont représentés suivant l'état de la technique antérieure traditionnelle, ces paliers sont du type traditionnel, l'alésage intérieur étant concentrique avec le diamètre extérieur.

Le clapet représenté est du type papillon à clapet à double excentration, toutefois la présente invention est également applicable et présente les mêmes avantages pour les autres vannes à papillon ou clapet sphérique ou à portée conique dure ou à portée resiliente, voire également les vannes à joint flexible.

La ligne **A-B** figurant sur les **FIG.1** et **FIG.2**.a représente la ligne de portée théorique du clapet et la ligne de portée du siège, ces deux lignes sont strictement superposées et confondues.

Par définition, pour que l'ensemble clapet-siège soit étanche à la fermeture, la ligne de portée **A-B** du clapet doit, en position de fermeture, être absolument superposée à la ligne de portée **A-B** du siège.

Si cette superposition absolue peut être approchée lors de l'execution de pièces prototypes elle est quasiment irréalisable industriellement du fait même des tolérances d'usinage (mini-maxi) de chaque pièce, on comprend aisément que les tolerances d'usinage des cotes **a** et **b FIG.2.b** sont très influentes sur le fonctionnement et devront par conséquence être très précises c'est-à-dire coûteuses.

Par ailleurs, l'assemblage et le fonctionnement des différentes pièces mobiles **FIG.2b** palier, arbre, clapet exigent un certain jeu mécanique minimum entre :
- l'alesage du guide dans le corps, cote **c** et le diamètre extérieur du guide cote **d**.
- le diamètre intérieur du guide, cote **e** et le diamètre extérieur de l'arbre cote **f**.
- le diamètre extérieur de l'arbre, cote **f** et l'alésage de passage d'arbre dans le clapet cote **g**.
   Il faut noter également que la pression du fluide à l'intérieur de la vanne exerce des forces tendant à pousser les pièces mobiles dans le sens du fluide, les jeux sont sous cette action localisés entre les surfaces non portantes des pièces ; lorsque l'on inverse le sens du fluide dans la vanne l'emplacement des jeux est également inversé de 180°.

Les figures **3.a, 3.b et 3.c** montrent les positions de la ligne de portée **A-B** du clapet par rapport à la ligne de portée **A-B** du siège ainsi que la position des jeux mécaniques entre chaque pièce constituante pour trois situations :
**FIG.3.a** Vanne, sans fluide (pression atmospherique)
**FIG.3.b** Vanne, fluide P poussant le clapet de la gauche vers la droite.
**FIG.3.c** Vanne, fluide P poussant le clapet de la droite vers la gauche.

La **FIG 3.a** représente la vanne sans fluide soit sans pression intérieure (pression atmosphérique), on constate que les jeux **j1, j2, j3 et j4** sont également répartis de part et d'autre de l'arbre de la vanne.

La ligne de portée **A-B** du clapet est superposée à la ligne de portée **A-B** du siège.

La **FIG 3.b** représente la vanne en service, la pression du fluide P poussant le clapet de la gauche vers la droite ; on constate que les jeux **j1** et **j4** sont éliminés donc nuls mais que les jeux **j2** et **j3** ont doublé en valeur; dans la pratique les jeux se sont additionnés et ils se positionnent du côté non appuyant, par exemple le jeu **j2** sur la **FIG.3.b** correspond à la somme des jeux **j1** + **j2** de la **FIG.3.a** ; ce déplacement des jeux entraine un déplacement des pièces mobiles provoquant un déplacement de la ligne de portée **A-B** du clapet (vers la droite soit dans le sens du fluide) par rapport à la ligne **A-B** du siège, les lignes de portées clapet/siège ne seront plus superposées ni confondues : la ligne du clapet de portée AB du clapet s'est déplacée d'une valeur **X** par rapport à la ligne de portée du siège, ceci provoque une degradation des performances d'étanchéité.

La **FIG.3c** représente la vanne en service, le fluide **P** poussant le clapet de la droite vers la gauche ; on constate que les jeux **j2** et **j3** sont éliminés donc nuls mais que les jeux **j1** et **j4** ont doubié ; dans la pratique les jeux se sont additionnés et ils se positionnent du côté non appuyant par exemple le jeu **j4** sur la **FIG.3.c** correspond à la somme des jeux **j3** + **j4** de la **FIG.3.a.** Ceci provoque un déplacement de la ligne de portée **A-B** du clapet (vers la gauche soit dans le sens du fluide) par rapport à la ligne **A-B** du siège ; les conséquences seront identiques à celles citées au paragraphe ci-dessus.

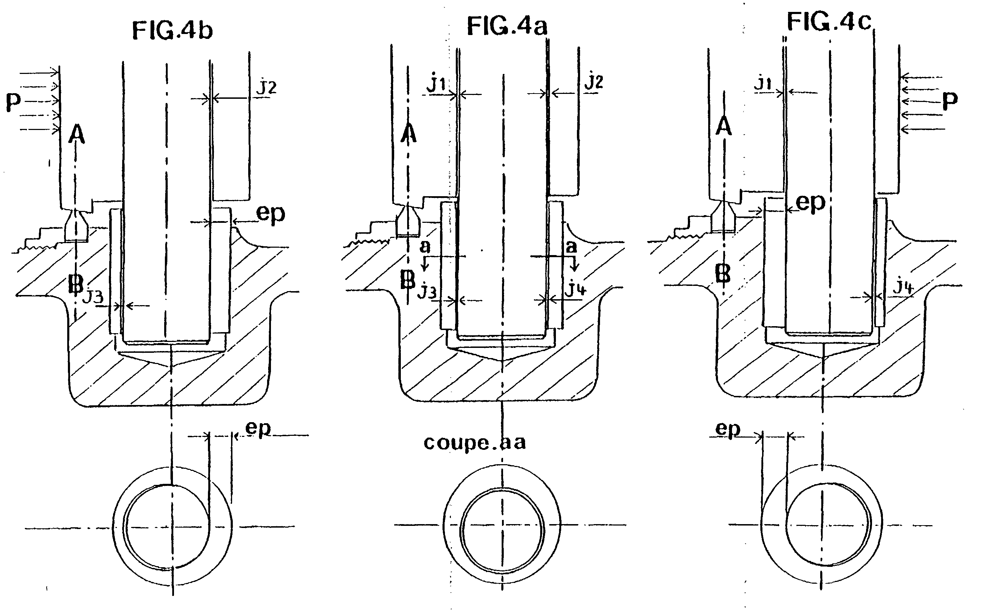

Les Figures **4a, 4b** et **4c** démontrent comment le dispositif selon la présente invention permet de remédier à ces inconvénients.

La **FIG. 4.a** représente à nouveau la vanne hors service soit sans pression intérieure (pression atmosphérique) on constate que les jeux **j1** et **j2, j3** et j4 sont également répartis de part et d'autre de l'arbre.

La ligne de portée **A-B** du clapet est superposée à la ligne de portée **A-B** du siège.

La **FIG. 4.b** représente la vanne en service, la pression du fluide **P** poussant le clapet de la gauche vers la droite, on constate évidemment que les jeux sont positionnes d'une facon similaire à la **FIG.3.b.** par contre on constate que la ligne de portée **A-B** du clapet est grâce au dispositif suivant l'invention, superposée et confondue à la ligne de portee **A.B** du siège, l'épaisseur portante **ep** est augmentee pour compenser les jeux ou l'usure ; la vanne sous pression conserve ses qualités d'étanchèite.

La **FIG. 4.c** représente la vanne en service la pression du fluide **P** poussant le clapet de la droite vers la gauche, on constate évidemment que les jeux sont positionnés d'une façon identique à la **FIG.3.c** par contre on constate que la ligne de portée A.B. du clapet est grâce au dispositif suivant l'invention superposée à la ligne de portée A.B. du siège, l'épaisseur portante **ep** est augmentee pour compenser les jeux ou l'usure ; la vanne conserve ses qualités d'étanchéité.

Selon la conception de la vanne il est possible de n'utiliser qu'un seul palier excentré, le deuxième restant du type conventionnel.

### CONCEPTION DU PALIER EXCENTRE

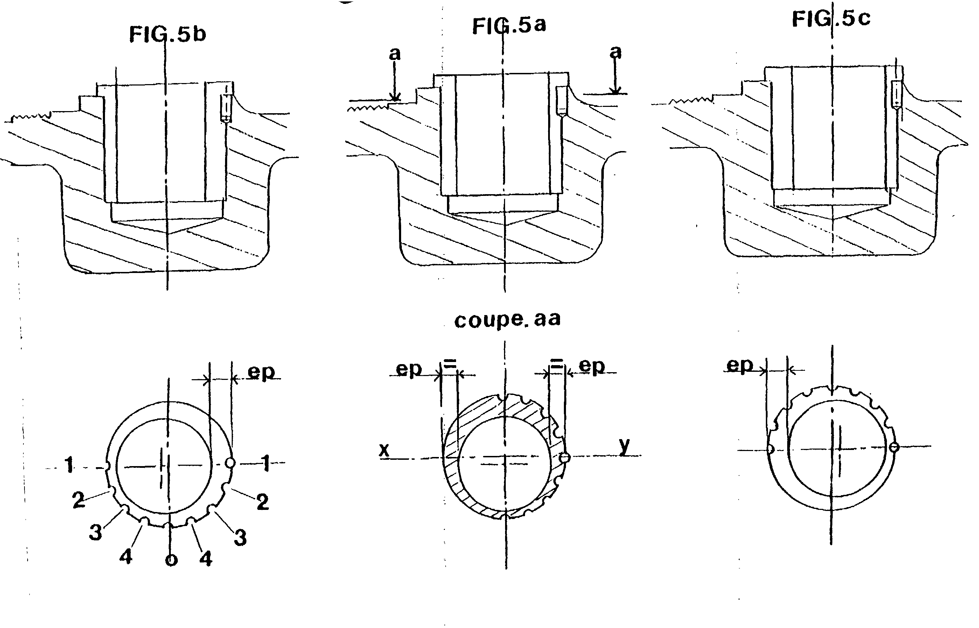

Le palier excentre se caractérise par un alésage central dont le centre est désaxé par rapport à son diamètre extérieur. L excentricite **ex** peut varier suivant les besoins. La **FIG.5.a** représente le palier en position neutre soit position O on constate que l'épaisseur portante **ep** du palier excentré est sur l'axe **xy** identique de chaque côté de l'arbre, la **FIG.5.b** représente le palier excentré après une rotation de ce dernier de 90° dans le sens des aiguilles d'une montre, l'épaisseur portante **ep** est maximale à droite de l'arbre de la vanne, la FIG.5.c représente le palier excentre après une rotation de ce dernier de 90° dans le sens inverse des aiguilles d'une montre, l'épaisseur portante **ep** est maximale à gauche de l'arbre de la vanne.

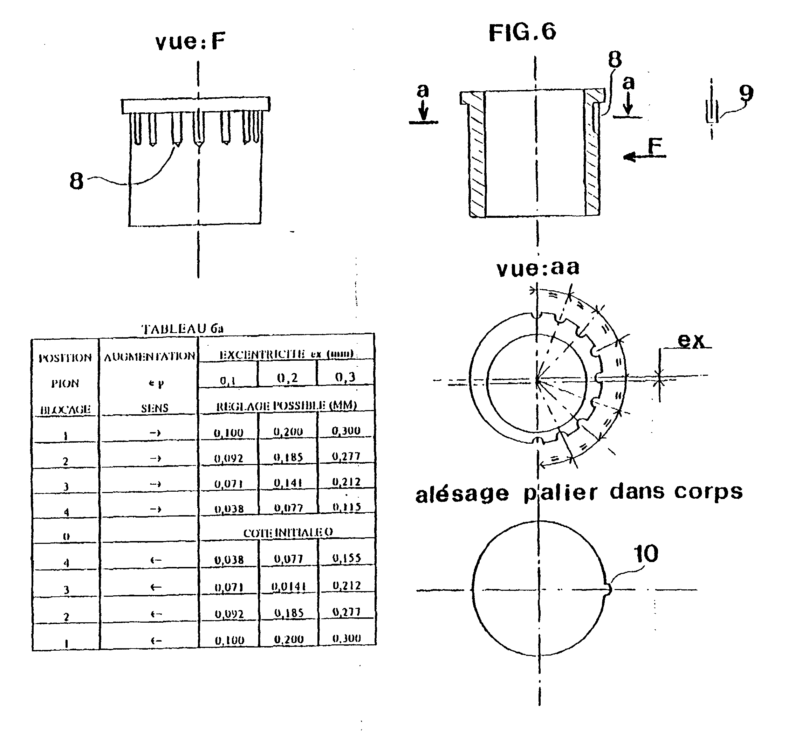

La **FIG.6** décrit la géométrie de ce palier.

Le tableau **6.a** indique à titre d'exemple le réglage possible par variation dimensionnelle de l'épaisseur portante **ep** pour des excentricités **ex** du palier de : 0,1 mm, 0,2 mm et 0,3 mm.

Les paliers excentrés comportent sur leur diamètre extérieur et sur 180 degrés des gorges demi cylindriques (8). Les **FIG.5.a. 5.b** et **5.c** représentent à partir d'une position neutre O, **FIG.5.a** et **FIG.5.b.** quatre positions (1, 2, 3, et 4) permettant d'augmenter l'épaisseur portante **ep** du palier sur la droite de l'arbre **FIG.5.b** et quatres autres positions (4, 3, 2 et 1) permettant d'augmenter l'épaisseur portante **ep** du palier sur la gauche de l'arbre **FIG.5.c**.

Le corps de vanne comporte également à la périphérie de l'alésage du palier une demie gorge cylindrique (10). Ceci permet par adjonction d'un pion de blocage (9) logé dans le trou formé par une demie gorge de palier coïncidant avec la demie gorge dans le corps de vanne, de positionner le palier sur la position souhaitee, ce pion (9) évite toute rotation éventuelle du palier, ce positionnement du palier peut être réalisé de facon différente à celle décrite soit par des clavettes et des rainures de clavettes ou avec des billes d'acier logées dans des trous. A titre d'exemple et non limitatif le diamètre du pion de blocage (9) peut être de diamètre 4 mm pour diamètre extérieur de palier de 25 mm.

L'excentricité du palier provoque simultanément à sa rotation un déplacement latéral perpendiculaire à l'axe xy **FIG.5.a**, ce déplacement sera compensé par un autocentrage du siège dans son logement.

Le nombre de positions possible dépendra du dimensionnement même des paliers et des pions (9), la **FIG. 6** représente pour exemple quatre plus quatre positions réparties dune façon égale tous les 22°5 sur 180°, ceci nest pas limitatif, la répartition peut être variable et appropriée suivant les besoins du constructeur.

Le dispositif suivant l'invention est particulièrement destiné au réglage de la portée des clapets sur leur siège de clapet des robinets et vannes à papillon à simple ou à double excentricité ainsi qu'aux vannes et robinets à boules ou à boisseaux sphériques qu'ils soient à portée métallique dure ou souple ou à joint flexible .

## Revendications

1. Dispositif permettant de régler la distance ou position relative entre le clapet d'une vanne et le siège sur lequel il prend appui au moment de la fermeture, l'ensemble comporte un corps de vanne (1), un arbre de vanne (4), un clapet (5), deux paliers (2 et 3), un siège de clapet (6), un anneau de blocage de siège (7), le palier supérieur (2) et le palier inférieur (3) ayant une forme de douille avec leur alésage intérieur excentré par rapport à leur diamètre extérieur, ce dispositif étant **caractérisé en ce que** ces paliers sont réglables en position et comportent sur leur partie extérieure une série de gorges (8) réparties sur 180 degrés recevant au moment du montage un pion de blocage (9) ou une clavette, le réglage ou la correction dimensionnelle souhaitée étant obtenue par le positionnement angulaire des paliers dans le corps de vanne : la position des paliers étant déterminée par l'emplacement présélectionné du pion de blocage dans la gorge appropriée du palier (8) et ce suivant les besoins du règlage.

2. Dispositif selon revendication précédente **caractérisé en ce que** l'orifice de logement des paliers dans le corps de vanne comporte une gorge (10) recevant au moment du montage un pion de blocage (9) ou une clavette.

3. Dispositif suivant l'une quelconque des revendications précédentes **caractérisé en ce que** le changement de position des paliers (2 et 3) est interne au corps de vanne donc indéréglable de l'extérieur.

4. Dispositif suivant l'une quelconque des revendications précédentes **caractérisé en ce que** les deux paliers (2 et 3) peuvent être positionnés différemment et donc apporter des corrections dimensionnelles différentes entre le palier supérieur (2) et le palier inférieur (3).

## Claims

1. Valve comprising a mechanical device allowing to adjust the relative position between the plug and the seat on to it bears on closed position the valve body sub-assembly includes one valve body(1), one valve shaft (4), one plug (5), two bearings (2&3), one seat (6), one retaining ring (7), the inside diameter of the two bearings (2&3) is offset compared to their outside diameter, this device is **characterized by** the fact that those two bearings (2&3) could be adjusted by rotation, their outside diameter includes on the upper side several grooves (8) distributed over 180 degrees receiving one immobilizing pin (9) or key during the assembling of the said valve, the required relative position between the plug and the seat is obtained by an appropriate selection of the location of the pin (9) or the key on the bearings, this selection depends of the required adjustment.

2. Device according to claim 1, wherein the valve body includes on the bearing holes one groove (10) receiving during assembly the stop pin or a key.

3. Device according to claims 1 and 2 wherein the adjustment of the relative position between said plug and said seat cannot be underdone from the outside of said valve body sub-assembly.

4. Device according to claims 1 and 2, wherein the two bearings (2) and (3) could be positioned at different angular position in order if necessary to eliminate dimensional manufacturing variation of tolerances between the two bearing 's holes.

## Patentansprüche

1. Vorrichtung zum Einstellen des relativen Abstands bzw. der Lage zwischen der Ventilklappe und dem Ventilsitz, an dem sie sich beim Schließen anlegt, wobei die Vorrichtung einen Ventilkörper (1), einen Ventilstößel (4), eine Klappe (5), zwei Lager (2 und 3), einen Ventilsitz (6) und einen Sitzsicherungsring (7) aufweist, wobei das obere Lager (2) und das untere Lager (3) in Form einer Hülse ausgeführt sind, deren innere Bohrung gegenüber ihrem Außendurchmesser außermittig angeordnet ist, wobei die Vorrichtung **dadurch gekennzeichnet** ist, dass diese Lager in ihrer Lage verstellbar sind und an ihrem Außenteil eine Reihe von über 180° verteilt angeordnete Nuten (8) aufweisen, die zum Zeitpunkt der Montage einen Sicherungsfinger (9) oder einen Keil aufnehmen, wobei die Einstellung bzw. die gewünschte maßliche Korrektur durch eine Winkelverstellung der Lager im Ventilkörper erhalten wird, wobei die Position der Lager durch die vorbestimmte Stelle des Sicherungsfingers in der geeigneten Lagernut (8) bestimmt wird, und zwar je nach gewünschter Einstellung.

2. Vorrichtung nach Anspruch 1, **dadurch gekennzeichnet, dass** die Aufnahmeöffnung der Lager im Ventilkörper eine Nut (10) enthält, die zum Zeitpunkt der Montage einen Sicherungsfinger (9) oder einen Keil aufnimmt.

3. Vorrichtung nach Anspruch 1 oder 2, **dadurch gekennzeichnet, dass** die Lageänderung der Lager (2 und 3) im Inneren des Ventilkörpers erfolgt und dadurch von außen unverstellbar ist.

4. Vorrichtung nach einem der vorangehenden Ansprüche, **dadurch gekennzeichnet, dass** die beiden Lager (2 und 3) unterschiedlich positioniert sein können und somit unterschiedliche maßliche Korrekturen zwischen dem oberen Lager (2) und dem unteren Lager (3) bewirken können.
